# EUROPEAN PATENT APPLICATION

(11) **EP 4 071 307 A1**
(43) Date of publication of application: **12.10.2022**
(21) Application number: 20909270.9
(22) Date of filing: 26.05.2020
(51) Int. Cl.: E02B 11/00, E02B 13/00

(54) **FARMLAND IRRIGATION AND DRAINAGE SYSTEM**

(30) Priority: 31.12.2019 CN 201911425451
(71) Applicant: Rechsand Ecological Enviroment Protection Science & Technology Co., Ltd., Anqing, Anhui 246699 (CN)
(72) Inventor: QIN, Shengyi, Beijing 100085 (CN)
(74) Representative: Puchberger & Partner Patentanwälte
(86) International application number: PCT/CN2020/092421
(87) International publication number: WO 2021/135052

(57) **Abstract**

Provided in the present application is a farmland irrigation and drainage system. The farmland irrigation and drainage system comprises: a water inlet pool, the water inlet pool being provided in a piece of farmland, and the water inlet pool being made with a water-filtering material; and, a water outlet pool, the water outlet pool being provided at an interval to the water inlet pool in the farmland, a water overflow being provided on the sidewall of the water outlet pool, the water outlet pool being in communication with the farmland via the water overflow, and a predetermined water level of the farmland being controlled by controlling the height of the water overflow. The technical solution of the present application solves the problem that automatic irrigation and drainage could not be implemented by a farmland irrigation and drainage system in the prior art.

## Description

### TECHNICAL FIELD

The present application relates to the field of agricultural irrigation and drainage technology, and specifically, to a farmland irrigation and drainage system.

### BACKGROUND

With the development of agricultural production activities, agricultural surface pollution has become a bottleneck that restricts the development of agricultural economy. A farmland irrigation and drainage system in the prior art is usually a ditch poured with concrete. A water inlet and a water outlet are controlled manually through canaling or by arranging gate valves, the automatic control of the water level in farmland cannot be implemented, and farmland irrigation water enters a water system directly through a canal without a decontamination function.

### SUMMARY OF THE INVENTION

A major objective of the present application is to provide a farmland irrigation and drainage system, to resolve the problem that automatic irrigation and drainage cannot be implemented by a farmland irrigation and drainage system in the prior art.

To achieve the foregoing objective, according to an aspect of the present application, a farmland irrigation and drainage system is provided, and includes: a water inlet pool, the water inlet pool being provided in a piece of farmland, the water inlet pool being made of a water-filtering material; and a water outlet pool, the water outlet pool being provided in the farmland and spaced apart from the water inlet pool, a water overflow being provided in a sidewall of the water outlet pool, the water outlet pool being in communication with the farmland via the water overflow, so as to control a predetermined water level of the farmland by controlling a height of the water overflow.

Further, in a vertical direction, the farmland irrigation and drainage system includes a plurality of levels of farmland, and the water inlet pool and the water outlet pool are provided in each level of farmland; and the farmland irrigation and drainage system further includes a water outlet pipe, and the water outlet pipe is in communication with the water outlet pool of an upper level of farmland and the water inlet pool of a lower level of farmland.

Further, the farmland irrigation and drainage system further includes: a first reservoir and a first circulation pipe, the first reservoir being provided below a bottommost level of farmland, the first circulation pipe being in communication with the water outlet pool located in the bottommost level of farmland and the first reservoir; a second reservoir and a second circulation pipe, the second reservoir being provided above a topmost level of farmland, the second circulation pipe being in communication with the water inlet pool located in the topmost-level of farmland and the second reservoir; a third circulation pipe, the third circulation pipe being in communication with the first reservoir and the second reservoir; and a water pump, the water pump being provided on the third circulation pipe.

Further, the first reservoir and the second reservoir are silica sand reservoirs; or the first reservoir is a silica sand reservoir; or the second reservoir is a silica sand reservoir.

Further, the water outlet pipe, the first circulation pipe, the second circulation pipe and the third circulation pipe are made of a UPVC material, and outer surfaces of the water outlet pipe, the first circulation pipe, the second circulation pipe and the third circulation pipe are coated with an anticorrosive material; or the water outlet pipe, the first circulation pipe, the second circulation pipe and the third circulation pipe are made of a UPVC material; or outer surfaces of the water outlet pipe, the first circulation pipe, the second circulation pipe and the third circulation pipe are coated with an anticorrosive material.

Further, the water inlet pool includes a brick, the brick being provided with a water storage cavity, where a plurality of bricks are laid in the vertical direction with cement mortar, and the brick is made of a silica sand material.

Further, the water outlet pool includes: a brick, the brick being provided with a water storage cavity, where a plurality of bricks are laid in the vertical direction with cement mortar, and the brick is made of a silica sand material; and a mortar layer, the mortar layer being coated on the outer peripheral surfaces of the plurality of bricks, where a top end of the mortar layer is flush with a bottom end of the water overflow.

Further, in the vertical direction, a drainage hole spaced apart from the water overflow is provided in the sidewall of the water outlet pool, the drainage hole is located below the water overflow, and the farmland irrigation and drainage system further includes: a drainage ditch, the drainage ditch being dug in the farmland, the drainage ditch being provided between the water inlet pool and the water outlet pool; a drainage pipe, where a first end of the drainage pipe is in communication with the drainage hole, and a second end of the drainage pipe is in communication with the drainage ditch; and a plugging member, the plugging member being detachably provided at the second end of the drainage pipe, to detach the plugging member to allow water in the farmland to enter the water outlet pool via the drainage pipe.

Further, in the vertical direction, a water outlet hole spaced apart from the water overflow is provided in the sidewall of the water outlet pool, and the water outlet hole is used for discharging water in the water outlet pool; and in the vertical direction, a bottom end of the water outlet hole is lower than a bottom end of the drainage hole.

Further, the water outlet pool includes: a plain concrete cushion, the plain concrete cushion being provided in the farmland; a brick, the brick being made of a silica sand material, where the outer peripheral wall of the brick is provided in a polygonal shape, and the brick is provided with a water storage cavity and a plurality of accommodating cavities provided at intervals in a circumferential direction of the water storage cavity; three bricks are laid in the vertical direction with cement mortar on the plain concrete cushion; the water overflow is provided in a sidewall of the brick located at the top, and a plurality of water overflows are provided at intervals in a circumferential direction of the brick located at the top; the drainage hole is provided in a sidewall of the brick located in the middle; one semicircular hole is provided in each of the sidewall of the brick located in the middle and a sidewall of the brick located at the bottom, and the two semicircular holes are joined to form the water outlet hole; a rock, a plurality of rocks being filled in the accommodating cavities; and a mortar layer, the mortar layer being coated on the outer peripheral surfaces of the three bricks, where a top end of the mortar layer is flush with a bottom end of the water overflow, and a bottom end of the mortar layer extends to the plain concrete cushion.

In the application of the technical solution in the present application, the water inlet pool is made of a water-filtering material. In this way, when irrigation water is introduced into the water inlet pool, the irrigation water is filtered by the water inlet pool before being irrigated to farmland, so that the farmland irrigation and drainage system provided in the present application has a decontamination function. In addition, the farmland irrigation and drainage system provided in the present application can implement the automatic control of the water level in farmland by arranging the water outlet pool. When the water level in the farmland is higher than the water overflow, water in the farmland enters the water outlet pool via the water overflow, to allow the water level in the farmland to return to a predetermined water level. According to a water level requirement of crops in farmland, the predetermined water level of the farmland may be controlled by controlling the height of the water overflow.

The farmland irrigation and drainage system provided in the present application can implement automatic irrigation and drainage, has the advantage of energy saving and environmental protection, and does not require manual supervision, so that the manpower of conventional manual supervision can be liberated. In addition, the farmland irrigation and drainage system provided in the present application achieves energy saving and environmental protection through the arrangement of pipes, reservoirs, and a water inlet pool with a water permeability function and a water filtration function.

### BRIEF DESCRIPTION OF THE DRAWINGS

The accompanying drawings of the specification that constitute a part of the present application are used to provide a further understanding of the present application. The schematic embodiments of the present application and the description thereof are used to described the present application and do not constitute an inappropriate limitation to the present application. In the accompanying drawings:
FIG. 1 is a schematic structural diagram of a farmland irrigation and drainage system according to an optional embodiment of the present application;
FIG. 2 is an enlarged schematic structural diagram of A in FIG. 1;
FIG. 3 is an enlarged schematic structural diagram of B in FIG. 1;
FIG. 4 is a schematic structural top view of a water inlet pool in FIG. 3;
FIG. 5 is a schematic structural top view of a water outlet pool in FIG. 2;
FIG. 6 is a schematic structural diagram of a brick located in the middle of a water outlet pool in FIG. 2;
FIG. 7 is a schematic structural diagram of a brick located at the bottom of a water outlet pool in FIG. 2;
FIG. 8 is a schematic structural diagram of a partial structure in a same level of farmland in the farmland irrigation and drainage system in FIG. 1; and
FIG. 9 is a schematic structural diagram of a partial structure in a plurality of levels of farmland in the farmland irrigation and drainage system in FIG. 1.

The accompanying drawings include the following reference numerals:
10. water inlet pool; 20. water outlet pool; 100. plain concrete cushion; 200. brick; 201. water storage cavity; 202. accommodating cavity; 203. semicircular hole; 300. rock; 400. mortar layer; 221. water overflow; 222. water outlet hole; 223. drainage hole; 30. water outlet pipe; 40. first reservoir; 50. first circulation pipe; 60. second reservoir; 70. second circulation pipe; 80. third circulation pipe; 90. water pump; 91. drainage ditch; 92. drainage pipe; 110. laid rock retaining wall; 120. box-type ecological retaining wall; 130. slag cushion; 140. inverted layer; 150. drainage pipe; and 1. farmland.

### DETAILED DESCRIPTION

The following clearly and completely describes the technical solutions in embodiments of this application with reference to the accompanying drawings in embodiments of this application. Apparently, the described embodiments are some rather than all of the embodiments of the present application. The following description of at least one exemplary embodiment is merely illustrative in nature and is in no way intended to pose any limitation on the present application and its application or use. All other embodiments obtained by persons of ordinary skill in the art based on the embodiments of the present application without creative efforts shall fall within the protection scope of the present application.

To resolve the problem that a farmland irrigation and drainage system in the prior art does not have a decontamination function, the present application provides a farmland irrigation and drainage system.

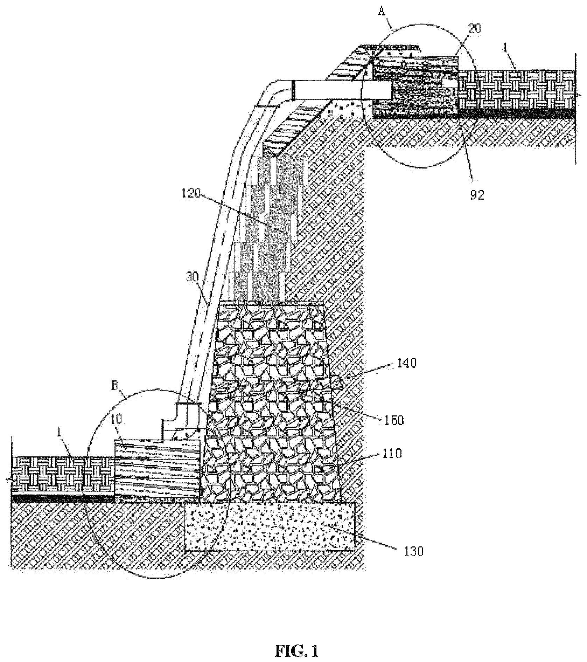

As shown in FIG. 1 to FIG. 9, a farmland irrigation and drainage system includes a water inlet pool 10 and a water outlet pool 20. The water inlet pool 10 is provided in a piece of farmland 1. The water inlet pool 10 is made of a water-filtering material. The water outlet pool 20 is provided in the farmland 1 and spaced apart from the water inlet pool 10. A water overflow 221 is provided in a sidewall of the water outlet pool 20. The water outlet pool 20 is in communication with the farmland 1 via the water overflow 221. A predetermined water level of the farmland 1 is controlled by controlling the height of the water overflow 221.

In the embodiments, the water inlet pool 10 is made of a water-filtering material. In this way, when irrigation water is introduced into the water inlet pool 10, the irrigation water is filtered by the water inlet pool 10 before being irrigated to farmland 1, so that the farmland irrigation and drainage system provided in the present application has a decontamination function. In addition, the farmland irrigation and drainage system provided in the present application can implement the automatic control of the water level in farmland by arranging the water outlet pool 20. When the water level in the farmland 1 is higher than the water overflow 221, water in the farmland 1 enters the water outlet pool 20 via the water overflow 221, to allow the water level in the farmland 1 to return to a predetermined water level. According to a water level requirement of crops in farmland, the predetermined water level of the farmland 1 may be controlled by controlling the height of the water overflow 221.

As shown in FIG. 1 to FIG. 9, in a vertical direction, the farmland irrigation and drainage system includes a plurality of levels of farmland 1. The water inlet pool 10 and the water outlet pool 20 are provided in each level of farmland 1. The farmland irrigation and drainage system further includes a water outlet pipe 30. The water outlet pipe 30 is in communication with the water outlet pool 20 of an upper level of farmland 1 and the water inlet pool 10 of a lower level of farmland 1. In this way, through the coordination between the water overflow 221 of the water outlet pool 20 and the water outlet pipe 30, the level-by-level irrigation of multi-level farmland can be implemented. Specifically, irrigation water is introduced into a topmost level of farmland 1 via the water inlet pool 10 in the topmost level of farmland. When the water level exceeds a predetermined water level, the irrigation water enters the water outlet pool 20 through the water overflow 221, and is then introduced into the water inlet pool 10 in a next level of farmland 1 via the water outlet pipe 30. The foregoing process is repeated, so that the automatic irrigation of the multi-level farmland can be implemented, and the predetermined water level in the multi-level farmland can be automatically controlled.

Optionally, the farmland irrigation and drainage system further includes a reservoir. The water outlet pool 20 of the bottommost level is in communication with the reservoir through the water outlet pipe 30. The water inlet pool 10 of the topmost level is in communication with the reservoir through a water inlet pipe. When there is excessive irrigation water in the farmland, the irrigation water may be discharged into the reservoir via the water outlet pool 30. When there is insufficient irrigation water in the farmland, water in the reservoir may be discharged into the water inlet pool of the topmost level and is filtered by the water inlet pool 10 before being irrigated to the farmland. In this way, zero discharge of irrigation water can be implemented, to facilitate the recycling of irrigation water and facilitate energy saving.

Optionally, the reservoir has a purification function. In this way, the decontamination effect of the farmland irrigation and drainage system can be further improved.

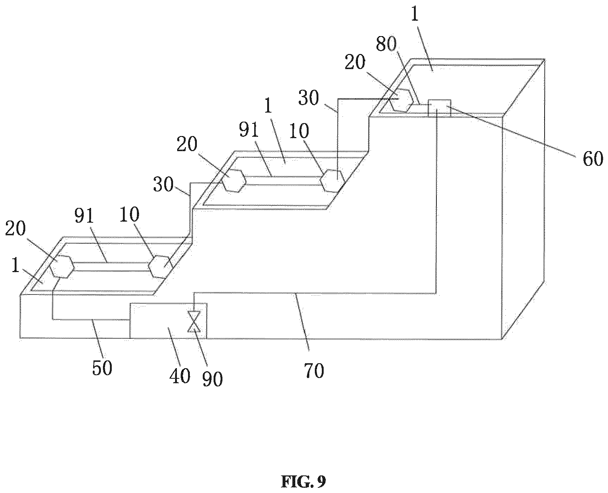

As shown in FIG. 9, the farmland irrigation and drainage system further includes a first reservoir 40, a first circulation pipe 50, a second reservoir 60, a second circulation pipe 70, a third circulation pipe 80 and a water pump 90. The first reservoir 40 is provided below a bottommost level of farmland 1. The first circulation pipe 50 is in communication with the water outlet pool 20 located in the bottommost level of farmland 1 and the first reservoir 40. The second reservoir 60 is provided above a topmost level of farmland 1. The second circulation pipe 70 is in communication with the water inlet pool 10 located in the topmost-level of farmland 1 and the second reservoir 60. The third circulation pipe 80 is in communication with the first reservoir 40 and the second reservoir 60. The water pump 90 is provided on the third circulation pipe 80. In this way, two levels of reservoirs are provided, to help to control the amount of irrigation water discharged into the water inlet pool 10 located in the topmost-level of farmland 1.

In a specific embodiment, during the use of the farmland irrigation and drainage system provided in the present application, collected rainwater or irrigation and drainage water is lifted by a pump from the lowest first reservoir 40 to the topmost second reservoir 60 for paddy field transfer, and starts to be irrigated down to each level of paddy field level by level. The water first permeates through the water inlet pool 10 laid with integrated silica sand well bricks (no mortar) to enter the farmland 1. A brick 200 has a water permeability function and a water filtration function, so that rainwater and farmland irrigation water with surface pollution can be purified. After the water enters the farmland 1 and the water level exceeds the normal 5-cm water level for rice, the water enters the water outlet pool 20 via the water overflow 221 of the water outlet pool 20 to flow into a next level of farmland 1 via a pipe. The pipe is made of a UPVC material. To ensure the use life, a preservative is coated outside. Paddy field irrigation is performed in each level of farmland 1 through the water inlet pool 10 and the water outlet pool 20. Water in the bottommost level of farmland 1 is gathered through pipes to enter the terminal first reservoir 40, so that the zero discharge of irrigation water can be implemented. Then the collected water is purified by the first reservoir 40 and is lifted again to the topmost second reservoir 60 for paddy field transfer, so that the comprehensive recycling of irrigation rainwater can be implemented, thereby achieving water saving and water purification.

Optionally, the first reservoir 40 and the second reservoir 60 are silica sand reservoirs; or the first reservoir 40 is a silica sand reservoir; or the second reservoir 60 is a silica sand reservoir. The silica sand reservoir can purify irrigation water, thereby further helping to improve the decontamination effect of the farmland irrigation and drainage system.

Optionally, the water outlet pipe 30, the first circulation pipe 50, the second circulation pipe 70 and the third circulation pipe 80 are made of a UPVC material. The UPVC material is not prone to rust and meets environmental protection requirements, and can be used in farmland, thereby avoiding pollution to irrigation water.

Optionally, outer surfaces of the water outlet pipe 30, the first circulation pipe 50, the second circulation pipe 70 and the third circulation pipe 80 are coated with an anticorrosive material. In this way, the service life of the pipes can be improved, thereby ensuring the use life of the farmland irrigation and drainage system and increasing the time interval between maintenance.

Optionally, the corrosion-resistant material is a chlorinated rubber topcoat. The chlorinated rubber topcoat is a corrosion-resistant paint with chlorinated rubber resin as a main film-forming material. The chlorinated rubber topcoat has a good corrosion resistance property, quick drying, easy construction, excellent water resistance and can provide adequate protection for pipes, thereby enhancing the service life of the pipes.

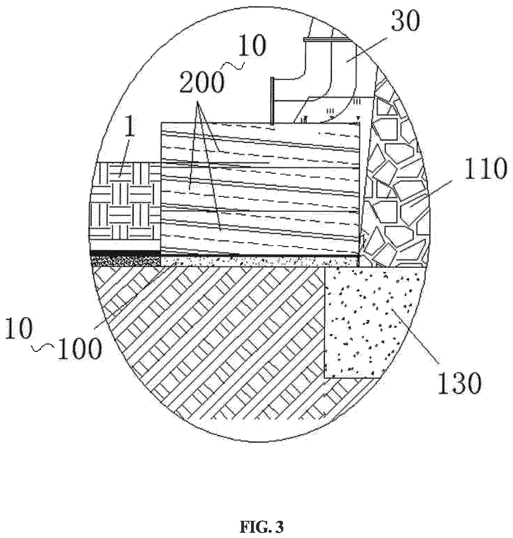

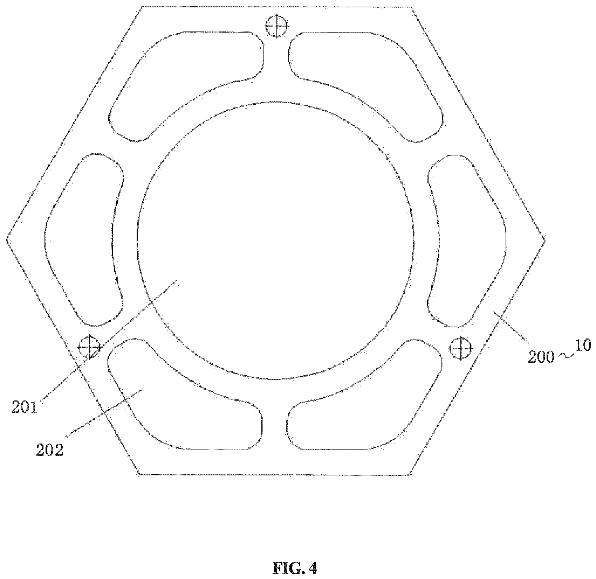

As shown in FIG. 3 and FIG. 4, the water inlet pool 10 includes a brick 200. The brick 200 is provided with a water storage cavity 201. A plurality of bricks 200 are laid in the vertical direction with cement mortar. The brick 200 is made of a silica sand material. In this way, the water inlet pool 10 is made of a splicing and laying process and only requires a small amount of cement mortar for laying. Compared with a ditch poured with concrete in the prior art, the construction period is not easily affected by the construction weather and has the advantages of short construction period, low cost, convenient construction, low operational difficulty, and low susceptibility to external conditions such as roads. Because the brick 200 has a water permeability function and a water filtration function, the irrigation water is introduced into the water storage cavity 201 and is filtered by a brick wall of the brick 200 to enter the farmland 1.

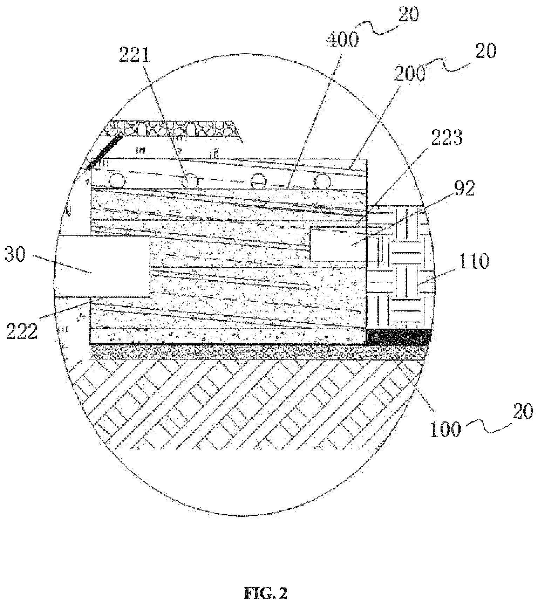

As shown in FIG. 2, FIG. 5, and FIG. 7, the water outlet pool 20 includes a brick 200 and a mortar layer 400. The brick 200 is provided with a water storage cavity 201. A plurality of bricks 200 are laid in the vertical direction with cement mortar. The brick 200 is made of a silica sand material. The mortar layer 400 is coated on the outer peripheral surfaces of the plurality of bricks 200. A top end of the mortar layer 400 is flush with a bottom end of the water overflow 221. In this way, the mortar layer 400 is used to prevent water in the water storage cavity 201 from permeating through the brick 200 to enter the farmland 1. When the water level in the farmland 1 is higher than the mortar layer 400, the water in the farmland 1 enters the water outlet pool 20 via the water overflow 221, thereby controlling the water level in the farmland 1.

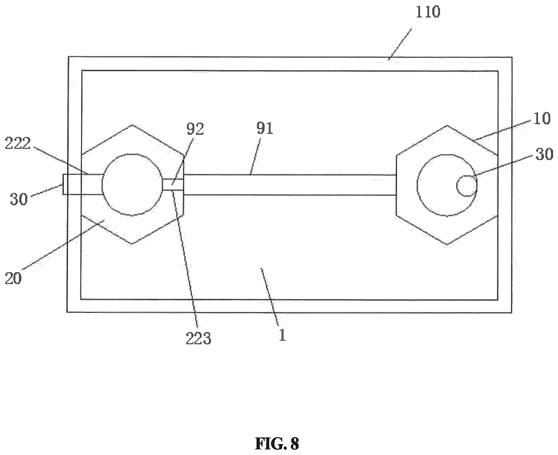

As shown in FIG. 2, in the vertical direction, a drainage hole 223 spaced apart from the water overflow 221 is provided in the sidewall of the water outlet pool 20. The drainage hole 223 is located below the water overflow 221. As shown in FIG. 8, the farmland irrigation and drainage system further includes a drainage ditch 91 and a drainage pipe 92. The drainage ditch 91 is dug in the farmland 1. The drainage ditch 91 is provided between the water inlet pool 10 and the water outlet pool 20. A first end of the drainage pipe 92 is in communication with the drainage hole 223. A second end of the drainage pipe 92 is in communication with the drainage ditch 91. The farmland irrigation and drainage system further includes a plugging member. The plugging member is detachably provided at the second end of the drainage pipe 92, to detach the plugging member to allow water in the farmland 1 to enter the water outlet pool 20 via the drainage pipe 92. In this way, during rainy season or when it is necessary to drain water in the farmland 1, the plugging member is detached to allow the water in the farmland 1 to flow into the water outlet pool 20 via the drainage ditch 91 and the drainage pipe 92, and then enters a next level of farmland via the water outlet pipe 30 or enters the first reservoir 40 via the first circulation pipe 50.

Optionally, the drainage ditch 91 is an earth ditch.

As shown in FIG. 2, in the vertical direction, a water outlet hole 222 spaced apart from the water overflow 221 is provided in the sidewall of the water outlet pool 20, and the water outlet hole 222 is used for discharging water in the water outlet pool 20; and in the vertical direction, a bottom end of the water outlet hole 222 is lower than a bottom end of the drainage hole 223. In this way, water that enters the water outlet pool 20 via the water overflow 221 and the drainage hole 223 may be discharged from the water outlet pool 20 via the water outlet hole 222.

Optionally, the water overflow 221, the drainage hole 223, and the water outlet hole 222 have gradually increasing diameters.

Optionally, the diameter of the water overflow 221 is 50 mm. The water overflow 221 is not provided on a side close the balk. Optionally, one or two water overflows 221 are provided on a single side.

Optionally, 1:2 mortar is coated from a position 15 cm under the topmost brick 200 around the outside of the water outlet pool 20 to the bottom, which may be specifically adjusted according to an on-site status.

Optionally, the diameter of the drainage hole 223 is 100 mm.

Optionally, the diameter of the water outlet hole 222 is 200 mm.

Optionally, the outer peripheral wall of the brick 200 is provided in a polygonal shape, to facilitate joined laying with a laid rock retaining wall 110.

Optionally, the water outlet pipe 30 includes a straight pipe and a bend.

Optionally, a pipe joint between the drainage pipe 92 and the water outlet pool 20 is filled with mortar, and a pipe joint between the drainage pipe 92 and the water outlet pool 20 is filled with mortar.

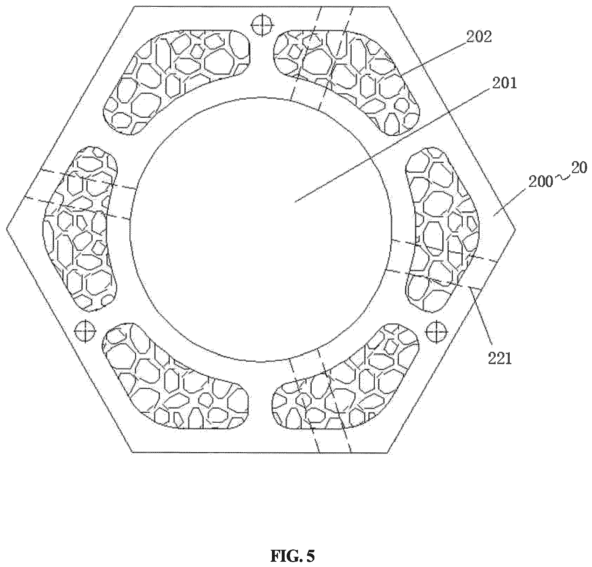

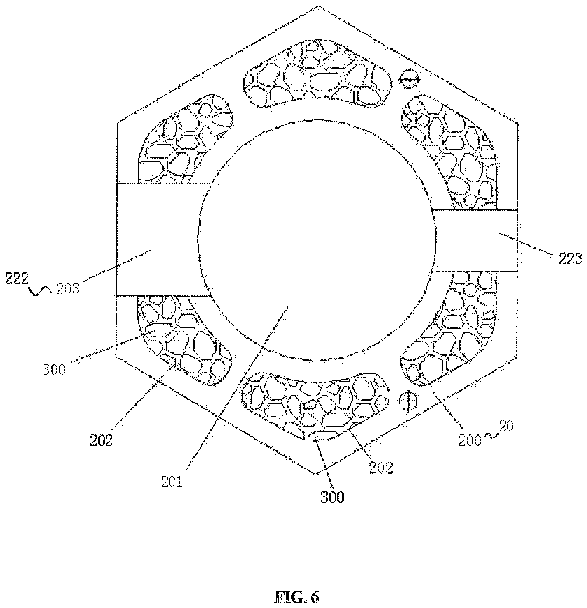

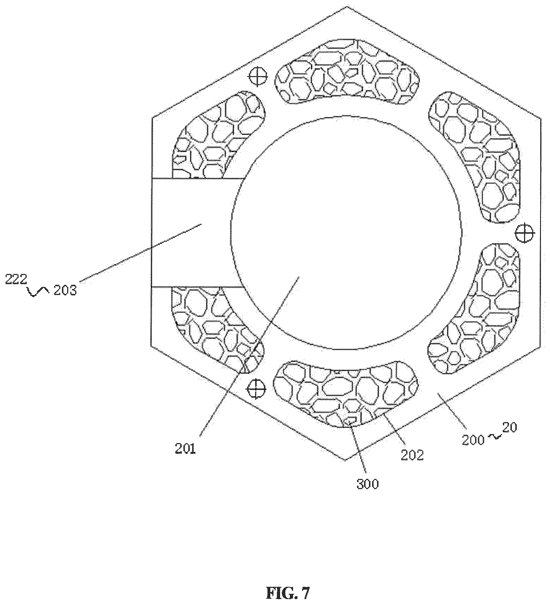

In the specific embodiment shown in FIG. 2, the water outlet pool 20 includes a plain concrete cushion 100, a brick 200, a rock 300 and a mortar layer 400. The plain concrete cushion 100 is provided in the farmland 1. The brick 200 is made of a silica sand material. The outer peripheral wall of the brick 200 is provided in a polygonal shape. The brick 200 is provided with a water storage cavity 201 and a plurality of accommodating cavities 202 provided at intervals in a circumferential direction of the water storage cavity 201. Three bricks 200 are laid in the vertical direction with cement mortar on the plain concrete cushion 100. As shown in FIG. 2 and FIG. 5, the water overflow 221 is provided in a sidewall of the brick 200 located at the top. A plurality of water overflows 221 are provided at intervals in a circumferential direction of the brick 200 located at the top. The drainage hole 223 is provided in a sidewall of the brick 200 located in the middle. As shown in FIG. 6 and FIG. 7, one semicircular hole 203 is provided in each of the sidewall of the brick 200 located in the middle and a sidewall of the brick 200 located at the bottom. The two semicircular holes 203 are joined to form the water outlet hole 222. A plurality of rocks 300 are filled in the accommodating cavities 202. The mortar layer 400 is coated on the outer peripheral surfaces of the three bricks 200. A top end of the mortar layer 400 is flush with a bottom end of the water overflow 221. A bottom end of the mortar layer 400 extends to the plain concrete cushion 100. The plain concrete cushion 100 has a leveling function, to facilitate subsequent laying of the bricks 200. The rocks 300 have a filtration function to only allow the passage of water through gaps between the plurality of rocks 300, thereby preventing the passage of relatively large impurities.

Optionally, the brick 200 in the present application is an integrated silica sand well brick.

Optionally, both the water inlet pool 10 and the water outlet pool 20 are formed by laying three integrated silica sand well bricks with M7.5 motor close to the laid rock retaining wall 110.

Optionally, the rock 300 is gravel.

Optionally, the farmland 1 is a paddy field, and the predetermined water level is 5 cm higher than the field surface of the paddy field. In this way, the effective depth of the paddy field is a depth most appropriate for the growth of rice, which is conducive to the growth of rice. Specifically, when the water level exceeds 5 cm, water automatically enters the water outlet pool 20, and enters a next level of paddy field via the water outlet pipe 30. The water outlet pool 20 can implement the automatic control of the predetermined water level of the paddy field without requiring other equipment and manual management.

As shown in FIG. 1, the farmland irrigation and drainage system further includes the laid rock retaining wall 110 and a box-type ecological retaining wall 120. The laid rock retaining wall 110 is provided on the outer peripheral side of one same level of farmland. The water inlet pool 10 and the water outlet pool 20 are provided opposite to each other and are both joined to the laid rock retaining wall 110. The water outlet pool 20 is provided close to a next level of farmland. The box-type ecological retaining wall 120 is provided on a transitional surface between two levels of farmland. The laid rock retaining wall 110 may be provided to receive irrigation water to prevent the irrigation water from flowing out, so that the predetermined water level of the irrigation water can be controlled. The arranged box-type ecological retaining wall 120 is convenient to mount, so that the construction period can be reduced and the construction difficulty is reduced. The farmland irrigation and drainage system provided in the present application is suitable for use during the reclamation and construction of farmland in mountainous uplands and hilly areas.

As shown in FIG. 1, the farmland irrigation and drainage system further includes an inverted layer 140 and a drainage pipe 150. The drainage pipe 150 is provided inside the laid rock retaining wall 110. The inverted layer 140 is provided at an end of the drainage pipe 150 away from the water inlet pool 10. The inverted layer 140 is used for preventing blockage in the drainage pipe 150.

As shown in FIG. 1, the farmland irrigation and drainage system further includes a slag cushion 130. The laid rock retaining wall 110 and the plain concrete cushion 100 are provided on the slag cushion 130. The slag cushion 130 has a leveling function.

In an existing farmland irrigation and drainage system, open ditches poured with concrete are mainly used. Canal pouring requires molding, on-site pouring, maintenance, and the like, and has high requirements for weather (climate and season), sites, road conditions, and the like. The construction process is limited by the above conditions. In addition, the cost of concrete construction is higher, and it is more difficult to carry out construction of reclaimed paddy field projects on mountainous uplands and hilly areas, and the construction period is relatively long. In the farmland irrigation and drainage system provided in the present application, the water inlet pool 10 and the water outlet pool 20 that are formed by laying integrated well bricks and have a water permeability function and a water filtration function no longer requires concrete pouring and involve no problems such as molding and maintenance. A UPVC pipe is used to connect water systems between upper and lower plots. The water inlet pool 10 purifies irrigation water. A hole is opened in the upper end of the water outlet pool 20 to automatically control the water level in a plot. The drainage ditch 91 in the field increases drainage in heavy rain and during reaping, so that the irrigation and drainage of sponge paddy fields can be automatically controlled. In the farmland irrigation and drainage system provided in the present application, field water flow is adopted to implement nearly 100% utilization of irrigation water, and an efficient water-saving function is provided. The integrated well bricks are not easily affected by weather, sites, road conditions, and the like, and the integrated well bricks are formed materials, so that the construction is fast, the cost is low, quality can be effectively controlled, the construction period can be shortened, and the progress of projects can be pushed forward.

The farmland irrigation and drainage system provided in the present application is a farmland irrigation and drainage system that integrates field water flow, pipe drainage, and irrigation water purification. The farmland irrigation and drainage system provided in the present application is applicable to different districts, can resolve the irrigation problem in dry season and the drainage problem in rainy season, and has an ecological interception function and a decontamination function. The water inlet pool 10 of the present application is formed by laying integrated well bricks with a water permeability function and a water filtration function, implements a pollutant interception function and a decontamination function for irrigation water, and has the advantages of low cement consumption, a simple process, a low cost, easy promotion, and low susceptibility to external influence.

The water inlet pool 10 and the water outlet pool 20 in the present application are formed by laying integrated well bricks with a water permeability function and a water filtration function, so that pollutants in farmland irrigation rainwater can be effectively intercepted, thereby reducing agricultural surface pollution. The construction process is splicing and laying, the process is simple, and the usage of auxiliary materials is low. The overall construction difficulty is low, the cost is low, the construction is convenient, the construction period is short, and the construction is not easily affected by the climate, roads, and other external conditions. A hole is opened at a position 5 cm higher than the field surface in the topmost brick 200 of the water outlet pool 20, to ensure that the effective depth of the paddy field is about 5 cm, which is most appropriate for the growth of rice. When the water level exceeds 5 cm, water automatically enters the water outlet pool, and enters a next level of paddy field via the water outlet pipe 30. In addition, the drainage ditch 91 is opened between the water inlet pool 10 and the water outlet pool 20. A ditch side bottom of the water outlet pool 20 is in communication with the drainage ditch 91 through the drainage pipe 92 with a plugging member, making it convenient to accelerate drainage in heavy rain and rainstorm and exhaust water in the paddy field during reaping, so that the automatic control of the water level of the paddy field can be implemented without requiring other equipment and manual management. The farmland irrigation and drainage system provided in the present application implements comprehensive recycling of water body. Collected irrigation water and rainwater enter the most downstream reservoir. After the purification by the reservoir, the water is lifted to the topmost level of paddy field, is then irrigated down level by level, and is finally collected by the bottommost level of paddy field to enter the reservoir, thereby implementing the recycling of water body and implementing the water-saving function.

Optionally, one same level of farmland may include only the water inlet pool 10 or the water outlet pool 20. The water inlet pool 10 has a water filtration function and a water permeability function, so that irrigation water can be decontaminated to avoid surface pollution. The water outlet pool 20 has a water level control function. When a water level exceeds a predetermined water level, water automatically enters a next level to implement automatic irrigation and drainage.

Described above are merely preferred embodiments of the present application, and are not intended to limit the present application. A person skilled in the art may make various changes and variations to the present application. Within the spirit and principle of the present application, any modifications, equivalent substitutions, improvements, and the like shall fall within the scope of protection of the present application.

## Claims

1. A farmland irrigation and drainage system, comprising:
a water inlet pool (10), the water inlet pool (10) being provided in a piece of farmland (1), the water inlet pool (10) being made of a water-filtering material; and
a water outlet pool (20), the water outlet pool (20) being provided in the farmland (1) and spaced apart from the water inlet pool (10), a water overflow (221) being provided in a sidewall of the water outlet pool (20), the water outlet pool (20) being in communication with the farmland (1) via the water overflow (221), so as to control a predetermined water level of the farmland (1) by controlling a height of the water overflow (221).

2. The farmland irrigation and drainage system of claim 1, wherein
in a vertical direction, the farmland irrigation and drainage system comprises a plurality of levels of farmland (1), and the water inlet pool (10) and the water outlet pool (20) are provided in each level of farmland (1); and
the farmland irrigation and drainage system further comprises a water outlet pipe (30), and the water outlet pipe (30) is in communication with the water outlet pool (20) of an upper level of farmland (1) and the water inlet pool (10) of a lower level of farmland (1).

3. The farmland irrigation and drainage system of claim 2, wherein the farmland irrigation and drainage system further comprises:
a first reservoir (40) and a first circulation pipe (50), the first reservoir (40) being provided below a bottommost level of farmland (1), the first circulation pipe (50) being in communication with the water outlet pool (20) located in the bottommost level of farmland (1) and the first reservoir (40);
a second reservoir (60) and a second circulation pipe (70), the second reservoir (60) being provided above a topmost level of farmland (1), the second circulation pipe (70) being in communication with the water inlet pool (10) located in the topmost-level of farmland (1) and the second reservoir (60);
a third circulation pipe (80), the third circulation pipe (80) being in communication with the first reservoir (40) and the second reservoir (60); and
a water pump (90), the water pump (90) being provided on the third circulation pipe (80).

4. The farmland irrigation and drainage system of claim 3, wherein
the first reservoir (40) and the second reservoir (60) are silica sand reservoirs; or
the first reservoir (40) is a silica sand reservoir; or
the second reservoir (60) is a silica sand reservoir.

5. The farmland irrigation and drainage system of claim 3, wherein
the water outlet pipe (30), the first circulation pipe (50), the second circulation pipe (70) and the third circulation pipe (80) are made of a UPVC material, and outer surfaces of the water outlet pipe (30), the first circulation pipe (50), the second circulation pipe (70) and the third circulation pipe (80) are coated with an anticorrosive material; or
the water outlet pipe (30), the first circulation pipe (50), the second circulation pipe (70) and the third circulation pipe (80) are made of a UPVC material; or
the outer surfaces of the water outlet pipe (30), the first circulation pipe (50), the second circulation pipe (70) and the third circulation pipe (80) are coated with an anticorrosive material.

6. The farmland irrigation and drainage system of any one of claims 1 to 5, wherein the water inlet pool (10) comprises:
a brick (200), the brick (200) being provided with a water storage cavity (201), wherein a plurality of bricks (200) are laid in the vertical direction with cement mortar, and the brick (200) is made of a silica sand material.

7. The farmland irrigation and drainage system of any one of claims 1 to 5, wherein the water outlet pool (20) comprises:
a brick (200), the brick (200) being provided with a water storage cavity (201), wherein a plurality of bricks (200) are laid in the vertical direction with cement mortar, and the brick (200) is made of a silica sand material; and
a mortar layer (400), the mortar layer (400) being coated on the outer peripheral surfaces of the plurality of bricks (200), wherein a top end of the mortar layer (400) is flush with a bottom end of the water overflow (221).

8. The farmland irrigation and drainage system of any one of claims 1 to 5, wherein in the vertical direction, a drainage hole (223) spaced apart from the water overflow (221) is provided in the sidewall of the water outlet pool (20), the drainage hole (223) is located below the water overflow (221), and the farmland irrigation and drainage system further comprises:
a drainage ditch (91), the drainage ditch (91) being dug in the farmland (1), the drainage ditch (91) being provided between the water inlet pool (10) and the water outlet pool (20);
a drainage pipe (92), wherein a first end of the drainage pipe (92) is in communication with the drainage hole (223), and a second end of the drainage pipe (92) is in communication with the drainage ditch (91); and
a plugging member, the plugging member being detachably provided at the second end of the drainage pipe (92), to detach the plugging member to allow water in the farmland (1) to enter the water outlet pool (20) via the drainage pipe (92).

9. The farmland irrigation and drainage system of claim 8, wherein in the vertical direction, a water outlet hole (222) spaced apart from the water overflow (221) is provided in the sidewall of the water outlet pool (20), and the water outlet hole (222) is used for discharging water in the water outlet pool (20); and in the vertical direction, a bottom end of the water outlet hole (222) is lower than a bottom end of the drainage hole (223).

10. The farmland irrigation and drainage system of claim 9, wherein the water outlet pool (20) comprises:
a plain concrete cushion (100), the plain concrete cushion (100) being provided in the farmland (1);
a brick (200), the brick (200) being made of a silica sand material, wherein the outer peripheral wall of the brick (200) is provided in a polygonal shape, and the brick (200) is provided with a water storage cavity (201) and a plurality of accommodating cavities (202) provided at intervals in a circumferential direction of the water storage cavity (201); three bricks (200) are laid in the vertical direction with cement mortar on the plain concrete cushion (100); the water overflow (221) is provided in a sidewall of the brick (200) located at the top, and a plurality of water overflows (221) are provided at intervals in a circumferential direction of the brick (200) located at the top; the drainage hole (223) is provided in a sidewall of the brick (200) located in the middle; one semicircular hole (203) is provided in each of the sidewall of the brick (200) located in the middle and a sidewall of the brick (200) located at the bottom, and the two semicircular holes (203) are joined to form the water outlet hole (222);
a rock (300), a plurality of rocks (300) being filled in the accommodating cavities (202); and
a mortar layer (400), the mortar layer (400) being coated on the outer peripheral surfaces of the three bricks (200), wherein a top end of the mortar layer (400) is flush with a bottom end of the water overflow (221), and a bottom end of the mortar layer (400) extends to the plain concrete cushion (100).
